# EUROPEAN PATENT APPLICATION

(11) **EP 3 179 475 A1**
(43) Date of publication of application: **14.06.2017**
(21) Application number: 16739388.3
(22) Date of filing: 17.05.2016
(51) Int. Cl.: G10L 15/22

(54) **VOICE WAKEUP METHOD, APPARATUS AND SYSTEM**

(30) Priority: 26.10.2015 CN 201510702094
(71) Applicant: LE Holdings (Beijing) Co., Ltd., Beijing 100025 (CN); Le Shi Zhi Xin Electronic Technology (Tianjin) Limited, Tianjin 300467 (CN)
(72) Inventor: WANG, Yujun, Tianjin 300467 (CN)
(74) Representative: Cohausz & Florack
(86) International application number: PCT/CN2016/082401
(87) International publication number: WO 2017/071182

(57) **Abstract**

The invention provides a voice-awaking method, apparatus, and system, and the method includes: extracting a voice feature from obtained current input voice; determining whether the current input voice comprises an instruction phrase according to the extracted voice feature using a pre-created keyword detection model in which keywords include at least preset instruction phrases; and when the current input voice comprises an instruction phrase, then awaking a voice recognizer, and performing a corresponding operation according to the instruction phrase. With the solutions according to embodiments of the invention, after the current input voice is detected for the instruction phrase, the voice recognizer is awoken directly to perform the corresponding operation according to the instruction phrase instead of firstly awaking the voice recognizer upon detection of an awaking phrase, and then detecting again new input voice for an instruction phrase, thus saving resources; and it may not be necessary for a user to speak out firstly the awaking phrase and then the instruction phrase each time, thus improving the experience of the user.

## Description

This application claims the benefit of Chinese Patent Application No. 201510702094.1, filed with the Chinese Patent Office on October 26, 2015 and entitled "Voice-awaking method, apparatus, and system", which is hereby incorporated by reference in its entirety.

### Field of Technology

The present invention relates to the field of voice recognition, and particularly to a voice-awaking method, apparatus, and system.

### Background

Various intelligent devices can interact with their users via voice due to the development of voice technologies. A voice interaction system of an intelligent device executes an instruction of a user by recognizing voice of the user. During traditional voice interaction, the user typically activates voice manually, for example, by pressing down a record button, to thereby interact via the voice. In order to enable to switch into voice more smoothly, the voice-awaking function has been designed to emulate the behavior of calling the opposite party to start interaction between one person and the other.

At present, in an existing voice-awaking scheme, generally the user firstly needs to speak out an awaking phrase to thereby interact with the intelligent device via voice, where the awaking phrase can be preset for the intelligent device. An awaking module of the voice interaction system detects the voice, extracts a voice feature, and determines whether the extracted voice feature matches with a voice feature of the preset awaking phrase, and if so, then the awaking module awakes a recognizing module to voice-recognize and semantically parse a subsequently input voice instruction. For example, the user intending to access the voice interaction system of a TV set instructs the TV set to switch to a sporting channel. Firstly the user needs to speak out an awaking phrase, e.g., "Hello TV", and the awaking module activates the recognizing module upon reception of the awaking phrase. The recognizing module starts to detect a voice instruction. At this time the user speaks out "watch sport channel", and the recognizing module recognizes the voice instruction, and switches the current channel to the sport channel in response to the instruction. The recognizing module is disabled from operating, after recognizing the instruction, and when the user intends to issue an instruction again, then he or she will speak out an awaking phrase again to awake the recognizing module.

In the existing voice-awaking scheme above, the user needs to awake the recognizing module via voice before he or she issues every instruction, that is, the user needs to firstly speak out an awaking phrase, and then issue the instruction via voice, so that the voice interaction system needs to detect a keyword again after an operation is performed in response to the instruction, thus wasting resources of the system; and the user needs to speak out an awaking phrase before he or she issues every instruction, thus complicating the voice-awaking scheme, and degrading the experience of the user.

### Summary

Embodiments of the invention provide a voice-awaking method and apparatus so as to address the problem in the prior art of wasting resources of a voice interaction system and degrading the experience of a user awaking the system via voice.

An embodiment of the invention provides a voice-awaking method including:
extracting a voice feature from obtained current input voice;
determining whether the current input voice comprises an instruction phrase according to the extracted voice feature using a pre-created keyword detection model in which keywords comprise at least preset instruction phrases; and
when the current input voice comprises an instruction phrase, then awaking a voice recognizer to perform a corresponding operation indicated by the instruction phrase, in response to the instruction phrase.

An embodiment of the invention provides a voice-awaking apparatus including:
an extracting unit configured to extract a voice feature from obtained current input voice;
an instruction phrase determining unit configured to determine whether the current input voice comprises an instruction phrase according to the extracted voice feature using a pre-created keyword detection model in which keywords comprise at least preset instruction phrases; and
a first awaking unit configured when the current input voice comprises an instruction phrase, to awake a voice recognizer to perform a corresponding operation indicated by the instruction phrase, according to the instruction phrase.

An embodiment of the invention provides a voice-awaking system including a key word detecting module and a voice recognizer, wherein:
the key word detecting module is configured to extract a voice feature from obtained current input voice; to determine whether the current input voice comprises an instruction phrase according to the extracted voice feature, using a pre-created keyword detection model comprising at least instruction phrases; and when the current input voice comprises an instruction phrase, to awake the voice recognizer, and to transmit the current input voice to the voice recognizer; and
the voice recognizer is configured to semantically parse the current input voice for a semantic entry of the current input voice; to determine that the semantic entry of the current input voice matches a preset instruction semantic entry; and to transmit an instruction to perform a corresponding operation indicated by the instruction phrase.

Advantageous effects of the voice-awaking method and apparatus according to the embodiments of the invention lie in that: after the instruction phrase is detected from the input voice , the voice recognizer is awoken directly to perform the corresponding operation in response to the instruction phrase instead of firstly awaking the voice recognizer upon detection of an awaking phrase, and then detecting again new input voice for an instruction phrase, thus saving resources.

### Brief Description of the Drawings

In order to make the technical solutions according to the embodiments of the invention or in the prior art more apparent, the drawings to which a description of the embodiments or the prior art refers will be briefly introduced below, and apparently the drawings to be described below are merely illustrative of some of the embodiments of the invention, and those ordinarily skilled in the art can derive from these drawings other drawings without any inventive effort. In the drawings:
Fig.1 is a flow chart of a voice-awaking method according to an embodiment of the invention;
Fig.2 is a schematic structural diagram of a keyword detection model which is a hidden Markov model according o an embodiment of the invention;
Fig.3 is a flow chart of a voice-awaking method according to a first embodiment of the invention;
Fig.4 is a schematic structural diagram of a voice-awaking apparatus according to a second embodiment of the invention; and
Fig.5 is a schematic structural diagram of a voice-awaking apparatus according to a third embodiment of the invention.

### Detailed Description of the Embodiments

In order to make the objects, technical solutions, and advantages of the embodiments of the invention more apparent, the technical solutions according to the embodiments of the invention will be described below clearly and fully with reference to the drawings in the embodiments of the invention, and apparently the embodiments described below are only a part but not all of the embodiments of the invention. Based upon the embodiments here of the invention, all the other embodiments which can occur to those skilled in the art without any inventive effort shall fall into the scope of the invention.

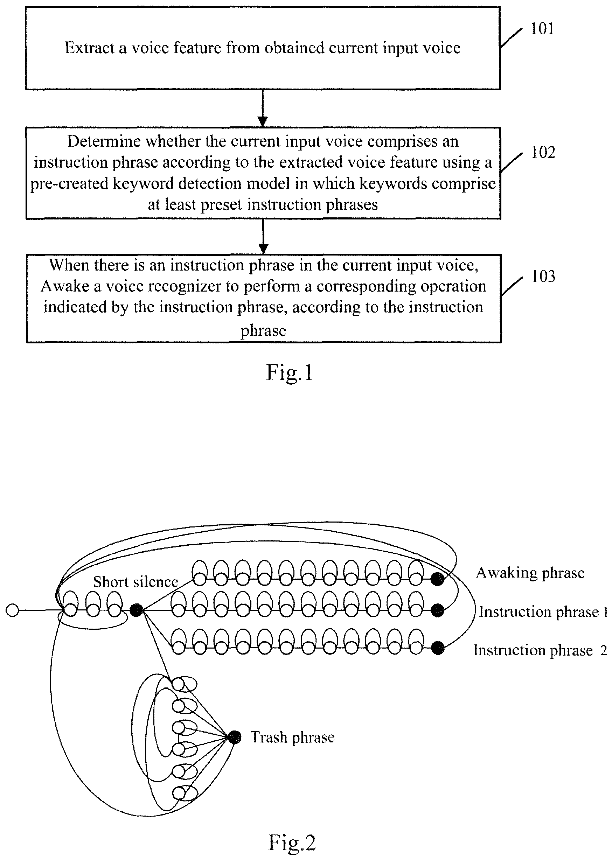

As illustrated in Fig.1, an embodiment of the invention provides a voice-awaking method including:
The step 101 is to extract a voice feature from obtained current input voice;
The step 102 is to determine whether the current input voice comprises an instruction phrase, according to the extracted voice feature using a pre-created keyword detection model in which keywords include at least preset instruction phrases; and
The step 103 is when the current input voice comprises an instruction phrase, to awake a voice recognizer to perform a corresponding operation indicated by the instruction phrase, according to the instruction phrase.

The voice-awaking method according to the embodiment of the invention can be applied to an intelligent device capable of interaction via voice, e.g., a TV set, a mobile phone, a computer, an intelligent refrigerator, etc. The voice feature can include a spectrum or cepstrum coefficient. The keywords in the keyword detection model can include the preset instruction phrases which are groups of phrases configured to instruct the intelligent device to perform particular operations, e.g., watch sport channel, "navigate to", "play", etc. The current input voice can be detected by the keyword detection model.

In an embodiment of the invention, firstly the keyword detection model is created before the input voice is detected for an instruction phrase, where the keyword detection model can be created particularly as follows:
Generally a user intending to interact via voice can speak out a preset keyword which may be an awaking phrase or an instruction phrase, where the awaking phrase is a group of characters configured to awake a voice recognizer, which is typically a group of characters including a number of voiced initial rhymes, for example, a group of characters beginning with initial rhymes m, n, l, r, etc., because the voiced initial rhymes are pronounced while a vocal cord is vibrating so that they can be well distinguished from ambient noise, and thus highly robust to the noise. For example, the awaking phrase can be preset as "Hello Lele" or "Hi, Lele". The instruction phrase is a group of characters configured to instruct the intelligent device to perform a corresponding operation. The instruction phrase is characterized in that it can reflect a function specific to the intelligent device, for example, "navigate to" is highly related to a device capable of navigation (e.g., a vehicle), and "play" is typically highly related to a device capable of playing multimedia (e.g., a TV set and a mobile phone). The instruction phrase can reflect directly an intension of the user. The voice feature can be a spectrum or cepstrum coefficient, etc., and a feature vector of a frame of voice can be extracted from an input voice signal every 10 milliseconds.

When the user speaks out the keyword, the user may speak out the awaking phrase or the instruction phrase, and the keyword typically varies in varying application scenarios so that the keyword detection model needs to be pre-created for the different application scenarios. The keyword detection model is created as an acoustic model. The acoustic model can be represented variously, e.g., a hidden Markov model, a neutral network model, etc., although the keyword detection model will be represented as a hidden Markov model by way of an example in an embodiment of the invention. As illustrated in Fig.2, each keyword can be expanded as a hidden Markov link in the hidden Markov model, i.e., a keyword state link on which each node corresponds to an acoustic parameter of the state of a phoneme of the keyword. A short-silence state, and a no ending state indicating the type of the keyword are preset for nodes on both ends of each keyword state link, where the no ending state indicates that the hidden Markov link is represented as an awaking phrase or an instruction phrase, as illustrated by a black node on each link in Fig.2. A node can jump forward indicating a varying voiced state, e.g., a varying degree of lip-rounding while a vowel is being pronounced; or can jump to itself indicating a temporarily unvarying voiced state, e.g., a stable voiced state while a vowel is being pronounced. Each link begins with a silence state node. In the hidden Markov state link, the other phonemes than the phonemes of the keyword are combined into a trash phrase state link which also includes a no ending state at the tail thereof indicating that the hidden Markov link includes a trash phrase.

For example, when the keyword detection model is represented as a hidden Markov model, the keyword detection model can be created in the following two approaches:

### First Approach:

For each phoneme in the voice, acoustic parameter samples corresponding to the phoneme are extracted from a corpus. From the perspective of a quality of voice, the voice is represented as phonemes which can include 10 vowels and 22 consonants, totaling to 32 phonemes. In the hidden Markov model, there are three preset states of a phoneme dependent upon voice features, where each state reflects one of the voice features of the phoneme, for example, the state can represent a varying shape of the vocal cord while the phoneme is being pronounced. The corpus is configured to store voice texts and their corresponding voice samples, where the voice texts can be voice texts in different fields, and the voice corresponding to the voice texts can be voice records of different subjects reading the voice texts. Since the different voice texts may include the same phoneme, the acoustic parameter samples corresponding to each phoneme are extracted from the corpus, where the acoustic parameter refers to a parameter characterizing the state of the phoneme. For example, when acoustic parameter samples corresponding to a phoneme "a" are extracted, where there are three states b, c, and d of the phoneme "a", and n samples are extracted respectively for the respective states, then the samples corresponding to the state b will be b1, b2, ..., bn, the samples corresponding to the state c will be c1, c2, ..., cn, and the samples corresponding to the state d will be d1, d2, ..., dn.

In a preset training algorithm, the acoustic parameter samples corresponding to each phoneme are trained to obtain an acoustic model representing a correspondence relationship between the phoneme and the corresponding acoustic parameters. The preset training algorithm can include the arithmetic averaging algorithm, for example, the samples of the three states b, c, and d of the phoneme "a" are arithmetically averaged respectively as b'=(b1+b2+......+bn)/n, c'=(c1+c2+......+cn)/n, and d'=(d1+d2+......+dn)/n, where b', c', and d' represent acoustic parameters corresponding to the phoneme "a". Alternatively, variances of the samples of the three states b, c, and d of the phoneme "a" can be calculated as acoustic parameters corresponding to the phoneme "a". Furthermore the weight of each neutral element can be trained through backward propagation using the hidden Markov model and the neutral network in combination in the prior art to determine a neutral network model which has a phoneme input thereto and outputs acoustic parameters corresponding to the phoneme. The acoustic model represents a correspondence relationship between each of 32 phonemes, and acoustic parameters of the phoneme.

After the keywords are determined for the different application scenarios, a pronunciation dictionary is searched for keyword phonemes corresponding to the respective keywords. The pronunciation dictionary is configured to store phonemes in phrases. After the keyword phonemes are determined, the keyword detection model is created from the acoustic parameters in the acoustic model, which correspond to the keyword phonemes.

### Second Approach:

In this approach, only acoustic parameters corresponding to keyword phonemes are determined instead of acoustic parameters corresponding to respective phonemes.

Keywords are determined for the different application scenarios, and a pronunciation dictionary is searched for keyword phonemes corresponding to the respective keywords.

Acoustic parameter samples corresponding to the keyword phonemes are extracted from a corpus.

In a preset training algorithm, the acoustic parameter samples corresponding to the keyword phonemes are trained to obtain the keyword detection model, where the applicable training algorithm can be the same as the algorithm in the first approach, so a detailed description thereof will not be repeated here.

The method and apparatus as well the corresponding system according to the embodiments of the invention will be detailed below in particular embodiments thereof with reference to the drawings.

### First Embodiment:

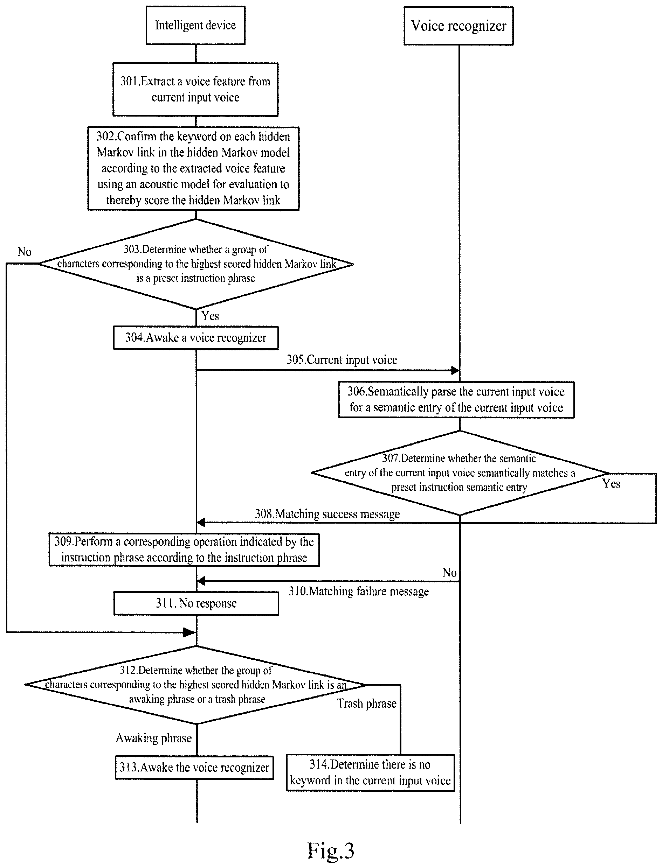

Fig.3 is a flow chart of a voice-awaking method according to a first embodiment of the invention, where the method particularly includes the following steps:

In the step 301, an intelligent device extracts a voice feature from current input voice.

In an embodiment of the invention, the intelligent device capable of interaction via voice detects a voice input. A keyword detection module in the intelligent device is configured to detect a keyword in the current input voice.

In this step, the feature can be extracted from the current input voice using an existing acoustic model for evaluation, where the voice feature can be a spectrum or cepstrum coefficient. The keyword detection module can detect the keyword in the current input voice using a keyword detection model, which is a hidden Markov model by way of an example in an embodiment of the invention. The hidden Markov model can determine the start and the end of the voice using a silence state node to thereby determine the current input voice.

The step 302 is to confirm the keyword on each hidden Markov link in the hidden Markov model according to the extracted voice feature using an acoustic model for evaluation to thereby score the hidden Markov link.

In this step, the extracted voice feature is compared with the state of each hidden Markov link to thereby score the hidden Markov link, where the score characterizes a similarity between a group of characters in the current input voice, and respective keywords so that there is a higher similarity for a higher score.

The step 303 is to determine whether a group of characters corresponding to the highest scored hidden Markov link is a preset instruction phrase, and when so, then the flow proceeds to the step 304; otherwise, the flow proceeds to the step 312.

In this step, it can be determined whether the group of characters corresponding to the highest scored hidden Markov link is a preset instruction phrase, according to a no ending state of the hidden Markov link.

The step 304 is to awake a voice recognizer.

In an embodiment of the invention, the voice recognizer is generally deployed on a cloud server.

The step 305 is to transmit the current input voice to the voice recognizer.

The step 306 is to semantically parse by the voice recognizer the current input voice for a semantic entry of the current input voice.

When an instruction phrase is detected from the current input voice, the instruction phrase may not refer to a voice instruction representing what the user speaks out, but may be included accidentally in the current input voice though the user does not intend to refer to that instruction phrase. For example, when the user speaks out "Hulu Island channel" including "Island channel " which is pronounced in Chinese similarly to "navigate to", then the user will not really intend to refer to navigation to some destination. Here the current input voice can be semantically parsed as in the prior art, for example, by matching it against a template, or annotating it using a sequence, so a detailed description thereof will be omitted here.

The step 307 is to determine by the voice recognizer whether the semantic entry of the current input voice semantically matches a preset instruction semantic entry, and when so, then the flow proceeds to the step 308; otherwise, the flow proceeds to the step 310.

In this step, the preset instruction semantic entry refers to a group of semantic phrases which are preset for the application scenario, e.g., "Instruction phrase" + "Place name". For example, for a navigator applicable to the navigation function, a preset voice instruction is "navigate to" + "Place name", where the place name can be Beijing, Zhong Guan Chun in Hai Dian District, Xi Tu Cheng, etc. The determined semantic entry of the current input voice is compared with respective preset instruction semantic entries, and when there is a preset instruction semantic entry agreeing with the semantic entry of the current input voice, then they are matched successfully, and the flow proceeds to the step 308; otherwise, they are matched unsuccessfully, and the flow proceeds to the step 310.

The step 308 is to transmit by the voice recognizer a matching success message to the intelligent device.

The step 309 is to execute by the intelligent device a corresponding operation indicated by the instruction phrase.

In this step, when the intelligent device is a TV set, and the user speaks out "watch sport channel", then the intelligent device will switch directly to the sporting channel upon reception of the matching success message transmitted by the voice recognizer. In contrast, the user firstly needs to speak out the awaking phrase (e.g., "Hello Lele"), and after the voice recognizer is awoken, then the user further speaks out the instruction out "watch sport channel", in the prior art.

The step 310 is to transmit by the voice recognizer a matching failure message to the intelligent device.

The step 311 is not to respond by the intelligent device upon reception of the matching failure message.

The step 312 is to determine whether the group of characters corresponding to the highest scored hidden Markov link is an awaking phrase or a trash phrase, and when it is an awaking phrase, then the flow proceeds to the step 313; otherwise, the flow proceeds to the step 314.

The step 313 is to awake the voice recognizer.

In this step, when the intelligent device detects an awaking phrase from the current input voice, then the voice recognizer will be awoken. The user typically speaks out an instruction phrase after speaking out the awaking phrase, and the intelligent device further performs keyword detection, and determines whether the current input voice comprises an instruction phrase, particularly in the same way as in the step 310 to the step 311 above, so a detailed description thereof will be omitted here.

The step 314 is to determine that there is no keyword in the current input voice when the phrase corresponding to the highest scored hidden Markov link is a trash phrase.

Furthermore when it is determined that there is no keyword in the current input voice, then the keyword detection model will return to its detection entrance for further detection of input voice.

With the method according to the first embodiment of the invention, after the input voice is detected for the instruction phrase, the voice recognizer is awoken directly to perform the corresponding operation according to the instruction phrase instead of firstly awaking the voice recognizer upon detection of an awaking phrase, and then detecting again new input voice for an instruction phrase, thus saving resources; and it may not be necessary for the user to speak out firstly the awaking phrase and then the instruction phrase each time, thus improving the experience of the user.

### Second Embodiment:

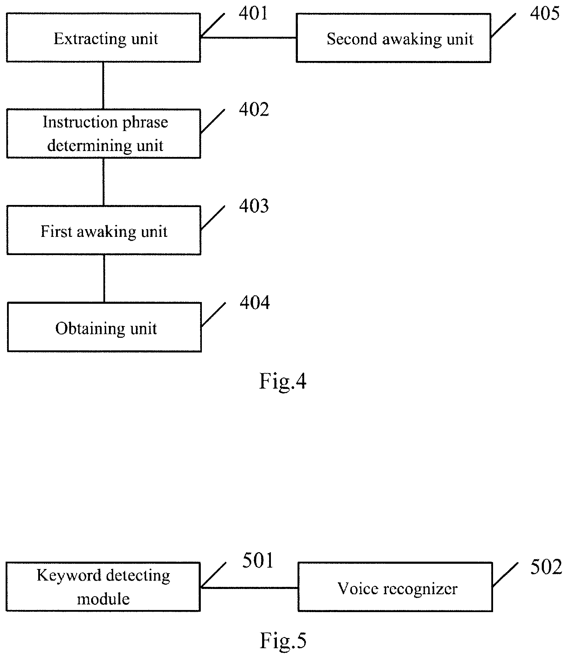

Based upon the same inventive idea, following the voice-awaking method according to the embodiment above of the invention, a second embodiment of the invention further provides a voice-awaking apparatus corresponding thereto, and Fig.4 illustrates a schematic structural diagram thereof, where the apparatus particularly includes:
An extracting unit 401 is configured to extract a voice feature from current input voice.

Particularly the feature can be extracted from the current input voice using an existing acoustic model for evaluation, where the voice feature can be a spectrum or cepstrum coefficient. A keyword in the current input voice can be detected using a pre-created keyword detection model.

An instruction phrase determining unit 402 is configured to determine whether the current input voice comprises an instruction phrase according to the extracted voice feature using a pre-created keyword detection model in which keywords include at least preset instruction phrases.

In an embodiment of the invention, the voice-awaking apparatus detects a keyword in the current input voice. Generally a user intending to interact via voice can speak out a preset keyword which may be an awaking phrase or an instruction phrase, where the awaking phrase is a group of characters configured to awake a voice recognizer, which is typically a group of characters including a number of voiced initial rhymes, for example, a group of characters beginning with initial rhymes m, n, l, r, etc., because the voiced initial rhymes are pronounced while a vocal cord is vibrating so that they can be well distinguished from ambient noise, and thus highly robust to the noise. For example, the awaking phrase can be preset as "Hello Lele" or "Hi, Lele". The instruction phrase is a group of characters configured to instruct the intelligent device to perform a corresponding operation. The instruction phrase is characterized in that it can reflect a function specific to the intelligent device, for example, "navigate to" is highly related to a device capable of navigation (e.g., a vehicle), and "play" is typically highly related to a device capable of playing multimedia (e.g., a TV set and a mobile phone). The instruction phrase can reflect directly an intension of the user. The voice feature can be a spectrum or cepstrum coefficient, etc., and a feature vector of a frame of voice can be extracted from an input voice signal every 10 milliseconds.

A first awaking unit 403 is configured to awake a voice recognizer when the current input voice comprises an instruction phrase, and to perform a corresponding operation indicated by the instruction phrase, according to the instruction phrase.

For example, when a TV set includes the voice-awaking apparatus, and the user speaks out "watch sport channel", then the intelligent TV set will switch directly to a sporting channel upon reception of a matching success message transmitted by the voice recognizer. In contrast, the user firstly needs to speak out the awaking phrase (e.g., "Hello Lee"), and after the voice recognizer is awoken, then the user further speaks out the instruction out "watch sport channel", in the prior art.

Furthermore the apparatus further includes:
An obtaining unit 404 is configured to obtain a matching success message of matching a semantic entry of the current input voice with an instruction semantic entry, where the matching success message is transmitted by the voice recognizer after semantically parsing the input voice for the semantic entry of the input voice, and matching the semantic entry of the input voice successfully with a preset instruction semantic entry.

When an instruction phrase is detected from the current input voice, the instruction phrase may not refer to a voice instruction representing what the user speaks out, but may be included accidentally in the current input voice though the user does not intend to refer to that instruction phrase. For example, when the user speaks out "Hulu Island channel" including "Island channel" which is pronounced in Chinese similarly to "navigate to", then the user will not really intend to refer to navigation to some destination. The preset instruction semantic entry refers to a group of semantic phrases which are preset for the application scenario, e.g., "Instruction phrase" + "Place name". For example, for a navigator applicable to the navigation function, a preset voice instruction is "navigate to" + "Place name", where the place name can be Beijing, Zhong Guan Chun in Hai Dian District, Xi Tu Cheng, etc. The determined semantic entry of the current input voice is compared with respective preset instruction semantic entries, and when there is a preset instruction semantic entry agreeing with the semantic entry of the current input voice, then they are matched successfully; otherwise, they are matched unsuccessfully.

Furthermore the instruction phrase determining unit 402 is configured, for each phoneme in the voice, to extract acoustic parameter samples corresponding to the phoneme from a corpus in which voice texts and voice corresponding to the voice texts are stored; to train the acoustic parameter samples corresponding to each phoneme in a preset training algorithm to obtain an acoustic model representing a correspondence relationship between the phoneme and the corresponding acoustic parameters; and to search a pronunciation dictionary for keyword phonemes corresponding to the respective keywords, and to create the keyword detection model from the keyword phonemes and the corresponding acoustic parameters in the acoustic model, where the pronunciation dictionary is configured to store phonemes in phrases.

Furthermore the instruction phrase determining unit 402 is configured to search a pronunciation dictionary for keyword phonemes corresponding to the keywords, where the pronunciation dictionary is configured to store phonemes in phrases; to extract acoustic parameter samples corresponding to the keyword phonemes from a corpus in which voice texts and their corresponding voice are stored; and to train the acoustic parameter samples corresponding to the keyword phonemes in a preset training algorithm to create the keyword detection model.

When the user speaks out the keyword, the user may speak out the awaking phrase or the instruction phrase, and the keyword typically varies in varying application scenarios so that the keyword detection model needs to be pre-created for the different application scenarios. The keyword detection model is created as an acoustic model. The acoustic model can be represented variously, e.g., a hidden Markov model, a neutral network model, etc., although the keyword detection model will be represented as a hidden Markov model by way of an example in an embodiment of the invention. As illustrated in Fig.2, each keyword can be expanded as a hidden Markov link in the hidden Markov model, i.e., a keyword state link on which each node corresponds to an acoustic parameter of the state of a phoneme of the keyword. A short-silence state, and a no ending state indicating the type of the keyword are preset for nodes on both ends of each keyword state link, where the no ending state indicates that the hidden Markov link is represented as an awaking phrase or an instruction phrase, as illustrated by a black node on each link in Fig.2. A node can jump forward indicating a varying voiced state, e.g., a varying degree of lip-rounding while a vowel is being pronounced; or can jump to itself indicating a temporarily unvarying voiced state, e.g., a stable voiced state while a vowel is being pronounced. Each link begins with a silence state node. In the hidden Markov state link, the other phonemes than the phonemes of the keyword are combined into a trash phrase state link which also includes a no ending state at the tail thereof indicating that the hidden Markov link includes a trash phrase. The hidden Markov model can determine the start and the end of the voice using a silence state node to thereby determine the current input voice.

For example, when the keyword detection model is represented as a hidden Markov model, the keyword detection model can be created in the following two approaches:

### First Approach:

For each phoneme in the voice, acoustic parameter samples corresponding to the phoneme are extracted from a corpus. From the perspective of a quality of voice, the voice is represented as phonemes which can include 10 vowels and 22 consonants, totaling to 32 phonemes. In the hidden Markov model, there are three preset states of a phoneme dependent upon voice features, where each state reflects one of the voice features of the phoneme, for example, the state can represent a varying shape of the vocal cord while the phoneme is being pronounced. The corpus is configured to store voice texts and voice corresponding to the voice texts, where the voice texts can be voice texts in different fields, and the voice corresponding to the voice texts can be voice records of different subjects reading the voice texts. Since the different voice texts may include the same phoneme, the acoustic parameter samples corresponding to each phoneme are extracted from the corpus, where the acoustic parameter refers to a parameter characterizing the state of the phoneme. For example, when acoustic parameter samples corresponding to a phoneme "a" are extracted, where there are three states b, c, and d of the phoneme "a", and n samples are extracted respectively for the respective states, then the samples corresponding to the state b will be b1, b2, ..., bn, the samples corresponding to the state c will be c1, c2, ..., cn, and the samples corresponding to the state d will be d1, d2, ..., dn.

In a preset training algorithm, the acoustic parameter samples corresponding to each phoneme are trained to obtain an acoustic model representing a correspondence relationship between the phoneme and the corresponding acoustic parameters. The preset training algorithm can include the arithmetic averaging algorithm, for example, the samples of the three states b, c, and d of the phoneme "a" are arithmetically averaged respectively as b'=(b1+b2+......+bn)/n, c'=(c1+c2+......+cn)/n, and d'=(d1+d2+......+dn)/n, where b', c', and d' represent acoustic parameters corresponding to the phoneme "a". Alternatively, variances of the samples of the three states b, c, and d of the phoneme "a" can be calculated as acoustic parameters corresponding to the phoneme "a". Furthermore the weight of each neutral element can be trained through backward propagation using the hidden Markov model and the neutral network in combination in the prior art to determine a neutral network model which has a phoneme input thereto and outputs acoustic parameters corresponding to the phoneme. The acoustic model represents a correspondence relationship between each of 32 phonemes, and acoustic parameters of the phoneme.

After the keywords are determined for the different application scenarios, a pronunciation dictionary is searched for keyword phonemes corresponding to the respective keywords. The pronunciation dictionary is configured to store phonemes in phrases. After the keyword phonemes are determined, the keyword detection model is created from the acoustic parameters in the acoustic model, which correspond to the keyword phonemes.

### Second Approach:

In this approach, only acoustic parameters corresponding to keyword phonemes are determined instead of acoustic parameters corresponding to respective phonemes.

Keywords are determined for the different application scenarios, and a pronunciation dictionary is searched for keyword phonemes corresponding to the respective keywords.

Acoustic parameter samples corresponding to the keyword phonemes are extracted from a corpus.

In a preset training algorithm, the acoustic parameter samples corresponding to the keyword phonemes are trained to obtain the keyword detection model, where the applicable training algorithm can be the same as the algorithm in the first approach, so a detailed description thereof will not be repeated here.

The instruction phrase determining unit 402 is configured to confirm the instruction phrase on each hidden Markov link in the hidden Markov model according to the extracted voice feature using an acoustic model for evaluation to thereby score the hidden Markov link on which the instruction phrase is confirmed; and to determine whether a group of characters corresponding to the highest score hidden Markov link on which the instruction phrase is confirmed is a preset instruction phrase.

Here the instruction phrase determining unit 402 is configured to compare the extracted voice feature with the state of each hidden Markov link using the existing acoustic model for evaluation to thereby score the hidden Markov link, where the score characterizes a similarity between a group of characters in the input voice, and respective keywords so that there is a higher similarity for a higher score.

Furthermore the keywords in the keyword detection model further include preset awaking phrases.

Furthermore the apparatus above further includes:
A second awaking unit 405 is configured to awake the voice recognizer upon determining that there is an awaking phrase in the input voice according to the extracted voice feature using the pre-created keyword detection model.

The functions of the respective units above can correspond to the respective processing steps in the flow illustrated in Fig.1 or Fig.2, so a repeated description thereof will be omitted here.

In an embodiment of the invention, the relevant functional modules can be embodied by a hardware processor.

With the apparatus according to the first embodiment of the invention, after the input voice is detected for the instruction phrase, the voice recognizer is awoken directly to perform the corresponding operation according to the instruction phrase instead of firstly awaking the voice recognizer upon detection of an awaking phrase, and then detecting again new input voice for an instruction phrase, thus saving resources; and it may not be necessary for the user to speak out firstly the awaking phrase and then the instruction phrase each time, thus improving the experience of the user.

### Third Embodiment:

Based upon the same inventive idea, following the voice-awaking method according to the embodiment above of the invention, a third embodiment of the invention further provides a voice-awaking system corresponding thereto, and Fig.5 illustrates a schematic structural diagram of the system including a key word detecting module 501 and a voice recognizer 502, where:

The key word detecting module 501 is configured to extract a voice feature from obtained current input voice; to determine whether the current input voice comprises an instruction phrase according to the extracted voice feature using a pre-created keyword detection model including at least instruction phrases to be detected; and when the current input voice comprises an instruction phrase, to awake the voice recognizer, and to transmit the current input voice to the voice recognizer.

A keyword in the current input voice can be detected using the pre-created keyword detection model.

The pre-created keyword detection model can be created particularly as follows:
Generally a user intending to interact via voice can speak out a preset keyword which may be an awaking phrase or an instruction phrase, where the awaking phrase is a group of characters configured to awake a voice recognizer, which is typically a group of characters including a number of voiced initial rhymes, for example, a group of characters beginning with initial rhymes m, n, l, r, etc., because the voiced initial rhymes are pronounced while a vocal cord is vibrating so that they can be well distinguished from ambient noise, and thus highly robust to the noise. For example, the awaking phrase can be preset as "Hello Lele" or "Hi, Lele". The instruction phrase is a group of characters configured to instruct the intelligent device to perform a corresponding operation. The instruction phrase is characterized in that it can reflect a function specific to the intelligent device, for example, "navigate to" is highly related to a device capable of navigation (e.g., a vehicle), and "play" is typically highly related to a device capable of playing multimedia (e.g., a TV set and a mobile phone). The instruction phrase can reflect directly an intension of the user. The voice feature can be a spectrum or cepstrum coefficient, etc., and a feature vector of a frame of voice can be extracted from an input voice signal every 10 milliseconds.

When the user speaks out the keyword, the user may speak out the awaking phrase or the instruction phrase, and the keyword typically varies in varying application scenarios so that the keyword detection model needs to be pre-created for the different application scenarios. The keyword detection model is created as an acoustic model. The acoustic model can be represented variously, e.g., a hidden Markov model, a neutral network model, etc., although the keyword detection model will be represented as a hidden Markov model by way of an example in an embodiment of the invention. As illustrated in Fig.2, each keyword can be expanded as a hidden Markov link in the hidden Markov model, i.e., a keyword state link on which each node corresponds to an acoustic parameter of the state of a phoneme of the keyword. A short-silence state, and a no ending state indicating the type of the keyword are preset for nodes on both ends of each keyword state link, where the no ending state indicates that the hidden Markov link is represented as an awaking phrase or an instruction phrase, as illustrated by a black node on each link in Fig.2. A node can jump forward indicating a varying voiced state, e.g., a varying degree of lip-rounding while a vowel is being pronounced; or can jump to itself indicating a temporarily unvarying voiced state, e.g., a stable voiced state while a vowel is being pronounced. Each link begins with a silence state node. In the hidden Markov state link, the other phonemes than the phonemes of the keyword are combined into a trash phrase state link which also includes a no ending state at the tail thereof indicating that the hidden Markov link includes a trash phrase.

For example, when the keyword detection model is represented as a hidden Markov model, the keyword detection model can be created in the following two approaches:

### First Approach:

For each phoneme in the voice, acoustic parameter samples corresponding to the phoneme are extracted from a corpus. From the perspective of a quality of voice, the voice is represented as phonemes which can include 10 vowels and 22 consonants, totaling to 32 phonemes. In the hidden Markov model, there are three preset states of a phoneme dependent upon voice features, where each state reflects one of the voice features of the phoneme, for example, the state can represent a varying shape of the vocal cord while the phoneme is being pronounced. The corpus is configured to store voice texts and their corresponding voice samples, where the voice texts can be voice texts in different fields, and the voice corresponding to the voice texts can be voice records of different subjects reading the voice texts. Since the different voice texts may include the same phoneme, the acoustic parameter samples corresponding to each phoneme are extracted from the corpus, where the acoustic parameter refers to a parameter characterizing the state of the phoneme. For example, when acoustic parameter samples corresponding to a phoneme "a" are extracted, where there are three states b, c, and d of the phoneme "a", and n samples are extracted respectively for the respective states, then the samples corresponding to the state b will be b1, b2, ..., bn, the samples corresponding to the state c will be c 1, c2, ..., cn, and the samples corresponding to the state d will be d 1, d2, ..., dn.

In a preset training algorithm, the acoustic parameter samples corresponding to each phoneme are trained to obtain an acoustic model representing a correspondence relationship between the phoneme and the corresponding acoustic parameters. The preset training algorithm can include the arithmetic averaging algorithm, for example, the samples of the three states b, c, and d of the phoneme "a" are arithmetically averaged respectively as b'=(b1+b2+......+bn)/n, c'=(c1+c2+......+cn)/n, and d'=(d1+d2+......+dn)/n, where b', c', and d' represent acoustic parameters corresponding to the phoneme "a". Alternatively, variances of the samples of the three states b, c, and d of the phoneme "a" can be calculated as acoustic parameters corresponding to the phoneme "a". Furthermore the weight of each neutral element can be trained through backward propagation using the hidden Markov model and the neutral network in combination in the prior art to determine a neutral network model which has a phoneme input thereto and outputs acoustic parameters corresponding to the phoneme. The acoustic model represents a correspondence relationship between each of 32 phonemes, and acoustic parameters of the phoneme.

After the keywords are determined for the different application scenarios, a pronunciation dictionary is searched for keyword phonemes corresponding to the respective keywords. The pronunciation dictionary is configured to store phonemes in phrases. After the keyword phonemes are determined, the keyword detection model is created from the acoustic parameters in the acoustic model, which correspond to the keyword phonemes.

### Second Approach:

In this approach, only acoustic parameters corresponding to keyword phonemes are determined instead of acoustic parameters corresponding to respective phonemes.

Keywords are determined for the different application scenarios, and a pronunciation dictionary is searched for keyword phonemes corresponding to the respective keywords.

Acoustic parameter samples corresponding to the keyword phonemes are extracted from a corpus.

In a preset training algorithm, the acoustic parameter samples corresponding to the keyword phonemes are trained to obtain the keyword detection model, where the applicable training algorithm can be the same as the algorithm in the first approach, so a detailed description thereof will not be repeated here.

The keyword detecting module 501 can be configured to confirm the instruction phrase on each hidden Markov link in the hidden Markov model according to the extracted voice feature using an acoustic model for evaluation to thereby score the hidden Markov link, where the score characterizes a similarity between a group of characters in the input voice, and respective keywords so that there is a higher similarity for a higher score; and to determine whether a group of characters corresponding to the highest scored hidden Markov link is a preset instruction phrase, particularly determine whether a group of characters corresponding to the highest scored hidden Markov link is a preset instruction phrase, according to the no ending state of the hidden Markov link, and when so, to awake the voice recognizer, and to transmit the input voice to the voice recognizer 502.

The voice recognizer 502 is configured to semantically parse the current input voice for a semantic entry of the current input voice; to determine that the semantic entry of the current input voice matches a preset instruction semantic entry; and to transmit for the instruction phrase an instruction to perform a corresponding operation indicated by the instruction phrase.

When an instruction phrase is detected from the input voice, then the instruction phrase may not refer to a voice instruction representing what the user speaks out, but may be included accidentally in the input voice though the user does not intend to refer to that instruction phrase. For example, when the user speaks out "Hulu Island channel" including "Island channel" which is pronounced in Chinese similarly to "navigate to", then the user will not really intend to refer to navigation to some destination. Thus the detected instruction phrase will be semantically parsed.

Further functions of the keyword detecting module 501 and the voice recognizer 502 in the voice-awaking system above as illustrated in Fig.5 according to the third embodiment of the invention can correspond to the respective processing steps in the flows illustrated in Fig.2 and Fig.3, so a repeated description thereof will be omitted here.

In summary, the solutions according to the embodiments of the invention include: extracting a voice feature from obtained current input voice; determining whether the current input voice comprises an instruction phrase according to the extracted voice feature using a pre-created keyword detection model in which keywords include at least preset instruction phrases; and when the current input voice comprises an instruction phrase, then awaking a voice recognizer, and performing a corresponding operation in response to the instruction phrase. With the solutions according to the embodiments of the invention, after the current input voice is detected for the instruction phrase, the voice recognizer is awoken directly to perform the corresponding operation in response to the instruction phrase instead of firstly awaking the voice recognizer upon detection of an awaking phrase, and then detecting again new input voice for an instruction phrase, thus saving resources; and it may not be necessary for the user to speak out firstly the awaking phrase and then the instruction phrase each time, thus improving the experience of the user.

Particular implementations of the respective units performing their operations in the apparatus and the system according to the embodiments above have been described in details in the embodiment of the method, so a repeated description thereof will be omitted here.

Those ordinarily skilled in the art can appreciate that all or a part of the steps in the methods according to the embodiments described above can be performed by program instructing relevant hardware, where the programs can be stored in a computer readable storage medium, and the programs can perform one or a combination of the steps in the embodiments of the method upon being executed; and the storage medium includes an ROM, an RAM, a magnetic disc, an optical disk, or any other medium which can store program codes.

Lastly it shall be noted that the respective embodiments above are merely intended to illustrate but not to limit the technical solution of the invention; and although the invention has been described above in details with reference to the embodiments above, those ordinarily skilled in the art shall appreciate that they can modify the technical solution recited in the respective embodiments above or make equivalent substitutions to a part of the technical features thereof; and these modifications or substitutions to the corresponding technical solution shall also fall into the scope of the invention as claimed.

## Claims

1. A voice-awaking method, comprising:
extracting a voice feature from obtained current input voice;
determining whether the current input voice comprises an instruction phrase according to the extracted voice feature using a pre-created keyword detection model in which keywords comprise at least preset instruction phrases; and
when the current input voice comprises an instruction phrase, then awaking a voice recognizer to perform a corresponding operation indicated by the instruction phrase, according to the instruction phrase.

2. The method according to claim 1, wherein before the corresponding operation indicated by the instruction phrase is performed according to the instruction phrase, the method further comprises:
obtaining a matching success message of matching a semantic entry of the current input voice with an instruction semantic entry, wherein the matching success message is transmitted by the voice recognizer, after the voice recognizer semantically parsing the input voice for the semantic entry of the current input voice, and matching the semantic entry of the current input voice successfully with a preset instruction semantic entry.

3. The method according to claim 1, wherein creating the keyword detection model comprises:
for each phoneme in the voice, extracting acoustic parameter samples corresponding to the phoneme from a corpus in which voice texts and voice corresponding to the voice texts are stored;
training the acoustic parameter samples corresponding to each phoneme according to a preset training algorithm to obtain an acoustic model representing a correspondence relationship between the phoneme and the corresponding acoustic parameters; and
searching a pronunciation dictionary for keyword phonemes corresponding to the respective keywords, and creating the keyword detection model from the keyword phonemes and the corresponding acoustic parameters in the acoustic model, wherein the pronunciation dictionary is configured to store phonemes in phrases.

4. The method according to claim 1, wherein creating the keyword detection model comprises:
searching a pronunciation dictionary for keyword phonemes corresponding to the keywords, wherein the pronunciation dictionary is configured to store phonemes in phrases;
extracting acoustic parameter samples corresponding to the keyword phonemes from a corpus in which voice texts and voice corresponding to the voice texts are stored; and
training the acoustic parameter samples corresponding to the keyword phonemes in a preset training algorithm to create the keyword detection model.

5. The method according to claim 1, wherein the keyword detection model is a hidden Markov link model; and
determining whether the current input voice comprises an instruction phrase according to the extracted voice feature using the pre-created keyword detection model comprises:
confirming the instruction phrase on each hidden Markov link in the hidden Markov model according to the extracted voice feature using an acoustic model for evaluation to thereby score the hidden Markov link on which the instruction phrase is confirmed; and
determining whether a group of characters corresponding to the highest score hidden Markov link on which the instruction phrase is confirmed is a preset instruction phrase.

6. The method according to claim 1, wherein the keywords in the keyword detection model further comprise preset awaking phrases; and
the method further comprises:
awaking the voice recognizer upon determining that there is an awaking phrase in the input voice according to the extracted voice feature using the pre-created keyword detection model.

7. A voice-awaking apparatus, comprising:
an extracting unit configured to extract a voice feature from obtained current input voice;
an instruction phrase determining unit configured to determine whether the current input voice comprises an instruction phrase according to the extracted voice feature using a pre-created keyword detection model in which keywords comprise at least preset instruction phrases; and
a first awaking unit configured when the current input voice comprises an instruction phrase, to awake a voice recognizer to perform a corresponding operation indicated by the instruction phrase, according to the instruction phrase.

8. The apparatus according to claim 7, further comprising:
an obtaining unit configured to obtain a matching success message of matching a semantic entry of the current input voice with an instruction semantic entry, wherein the matching success message is transmitted by the voice recognizer, after the voice recognizer semantically parsing the input voice for the semantic entry of the current input voice, and matching the semantic entry of the current input voice successfully with a preset instruction semantic entry.

9. The apparatus according to claim 7, wherein the instruction phrase determining unit is configured, for each phoneme in the voice, to extract acoustic parameter samples corresponding to the phoneme from a corpus in which voice texts and voice corresponding to the voice texts are stored; to train the acoustic parameter samples corresponding to each phoneme in a preset training algorithm to obtain an acoustic model representing a correspondence relationship between the phoneme and the corresponding acoustic parameters; and to search a pronunciation dictionary for keyword phonemes corresponding to the respective keywords, and to create the keyword detection model from the keyword phonemes and the corresponding acoustic parameters in the acoustic model, wherein the pronunciation dictionary is configured to store phonemes in phrases.

10. The apparatus according to claim 7, wherein the instruction phrase determining unit is configured to search a pronunciation dictionary for keyword phonemes corresponding to the keywords, wherein the pronunciation dictionary is configured to store phonemes in phrases; to extract acoustic parameter samples corresponding to the keyword phonemes from a corpus in which voice texts and voice corresponding to the voice texts are stored; and to train the acoustic parameter samples corresponding to the keyword phonemes in a preset training algorithm to create the keyword detection model.

11. The apparatus according to claim 7, wherein the keyword detection model is a hidden Markov link model; and
the instruction phrase determining unit is configured to confirm the instruction phrase on each hidden Markov link in the hidden Markov model according to the extracted voice feature using an acoustic model for evaluation to thereby score the hidden Markov link on which the instruction phrase is confirmed; and to determine whether a group of characters corresponding to the highest score hidden Markov link on which the instruction phrase is confirmed is a preset instruction phrase.

12. The apparatus according to claim 7, wherein the keywords in the keyword detection model further comprise preset awaking phrases; and
the apparatus further comprises:
a second awaking unit configured to awake the voice recognizer upon determining that there is an awaking phrase in the input voice according to the extracted voice feature using the pre-created keyword detection model.

13. A voice-awaking system, comprising a key word detecting module and a voice recognizer, wherein:
the key word detecting module is configured to extract a voice feature from obtained current input voice; to determine whether the current input voice comprises an instruction phrase according to the extracted voice feature using a pre-created keyword detection model comprising at least instruction phrases to be detected; and when the current input voice comprises an instruction phrase, to awake the voice recognizer, and to transmit the current input voice to the voice recognizer; and
the voice recognizer is configured to semantically parse the current input voice for a semantic entry of the current input voice; to determine that the semantic entry of the current input voice matches a preset instruction semantic entry; and to transmit an instruction to perform a corresponding operation indicated by the instruction phrase.
